# EUROPÄISCHE PATENTSCHRIFT

(11) **EP 2 979 351 B1**
(45) Veröffentlichungstag und Bekanntmachung des Hinweises auf die Patenterteilung: **22.02.2017**
(21) Anmeldenummer: 14718948.4
(22) Anmeldetag: 11.04.2014
(51) Int. Cl.: H02K 17/16, H02K 15/00

(54) **LÄUFER FÜR EINEN ELEKTROMOTOR**
ROTOR FOR AN ELECTRIC MOTOR
ROTOR POUR MOTEUR ELECTRIQUE

(30) Priorität: 02.05.2013 DE 102013208032
(43) Veröffentlichungstag der Anmeldung: 03.02.2016
(73) Patentinhaber: Siemens Aktiengesellschaft, 80333 München (DE)
(72) Erfinder: LIPOT, Hans-Werner, 97616 Bad Neustadt (DE)
(86) Internationale Anmeldenummer: PCT/EP2014/057354
(87) Internationale Veröffentlichungsnummer: WO 2014/177362

(56) Entgegenhaltungen:
- JP-A- S61 185 047
- US-A- 2 944 171
- US-A1- 2011 291 517
- US-A1- 2013 049 517

## Beschreibung

Die Erfindung betrifft einen Läufer für einen Elektromotor, umfassend ein auf einer Welle angeordnetes Blechpaket aus einer Anzahl von gegeneinander isolierten Blechen, wobei in einem axialen Randbereich des Blechpakets in eine Anzahl von Blechen Aussparungen eingebracht sind, die derart angeordnet sind, dass sie einen um die Welle umlaufenden Hohlraum bilden.

Elektromotoren dienen der Erzeugung mechanischer, üblicherweise rotatorischer Energie aus Elektrizität. In Elektromotoren wird die Kraft, die von einem Magnetfeld auf die stromdurchflossenen Leiter einer Spule ausgeübt wird, in Bewegung umgesetzt. Sie umfassen dazu einen statischen Ständer und einen darin rotierenden, in entsprechenden Lagern gelagerten Läufer. Der heute am meisten verwendete Elektromotor ist dabei der Asynchronmotor.

Für Läufer von Asynchronmotoren existieren zwei Bauformen: Beim Schleifringläufermotor weist der Läufer Spulen (Drahtwicklungen) auf, deren Enden mittels Schleifringen aus dem Motor heraus geführt sind. Diese werden während des Anlaufens durch Anlasswiderstände verbunden und mit steigender Drehzahl allmählich kurzgeschlossen.

Der Kurzschlussläufermotor ist hingegen wesentlich einfacher aufgebaut: Der Läufer besteht aus einem Eisenblechpaket, in das im Wesentlichen axial ausgerichtete Metallstäbe aus Nichteisenmetallen eingebettet sind. Das Eisenblechpaket besteht aus vielen einzelnen gegenseitig isolierten Blechen, in die zur Aufnahme der Metallstäbe Nuten einbracht sind. Die Metallstäbe sind an beiden axialen Enden mit umlaufenden Kurzschlussringen versehen.

Die zulässige Maximaldrehzahl von derartigen Kurzschlussläufermotoren wird heute durch die mechanische Belastbarkeit der Kurzschlussringe gegeben. Zur weiteren Drehzahlerhöhung wird daher angestrebt, die mechanische Belastbarkeit der Kurzschlussringe zu erhöhen. Hierfür wurde beispielsweise ein Stützring (Armierungsring) vorgesehen, der an den axialen Enden des Blechpakets aufgesetzt ist, sich bis zur Welle erstreckt und den Kurzschlussring vollständig umschließt. Ein Nachteil dieser Lösung ist jedoch das relativ aufwändige Einbringen eines aushärtbaren druckfesten Materials, damit die sichere Funktion des Stützrings gewährleistet ist.

Alternativ können Stütz- oder Armierungsringe direkt eingegossen werden. Diese Lösung hat den Nachteil, dass die Armierungsringe aufwändig in die Druckgussform eingebracht werden müssen. Dadurch wird diese Form sehr komplex.

Des Weiteren sind noch so genannte Kappenringe bekannt. Dies sind Hülsen aus amagnetischem Werkstoff, die über die Kurzschlussringe geschrumpft werden. Für einen sicheren Halt der Hülse auf dem Läufer muss diese sich mit einem Teil ihrer Länge auch auf dem Blechpaket abstützen. Dieser Teil des Paketes trägt danach jedoch nicht mehr zur elektromagnetischen Drehmomentbildung bei. Dies ist ein erheblicher Nachteil hinsichtlich der Leistungsfähigkeit des Motors.

Aus der JP S61-185047 ist es bekannt, dass in einem axialen Randbereich des Blechpakets nichtmagnetische Stahlplatten eingebracht sind, die derart angeordnet sind, dass sie einen um die Welle umlaufenden Hohlraum bilden.

Weitere Kurzschlussläufer sind aus der US 2011/291517 A1 und der US 2,944,171 A bekannt.

Es ist daher Aufgabe der Erfindung, einen Läufer für einen Elektromotor der eingangs genannten Art anzugeben, welcher eine besonders hohe Maximaldrehzahl und Leistung des Elektromotors bei besonders geringem Herstellungsaufwand erlaubt.

Diese Aufgabe wird gemäß den Patentansprüchen gelöst.

Die Erfindung geht dabei von der Überlegung aus, dass eine technisch besonders einfache Stabilisierung des Kurzschlussrings dadurch erreicht werden könnte, dass der Kurzschlussring von den Läuferblechen selbst umgeben und gehalten wird. Die Läuferbleche stützen sich nämlich auf der Welle ab und können dadurch ein stabiles Korsett für den jeweiligen Kurzschlussring bilden. Hierfür muss in das Blechpaket am axialen Rand ein umlaufender Hohlraum eingebracht werden, in dem der Kurzschlussring aufgenommen werden kann. Da dieser Hohlraum hinsichtlich seiner Breite mehrere Bleche umfassen sollte, sollte er gebildet werden, indem entsprechende Aussparungen in die Bleche eingebracht, beispielsweise eingestanzt werden. Durch entsprechende Wahl der Form der Ausstanzungen und der Anordnung benachbarter Bleche zueinander kann so ein entsprechender umlaufender Hohlraum gebildet werden.

In vorteilhafter Ausgestaltung erstreckt sich die jeweilige Aussparung in Umfangsrichtung und ist von radialen Streben begrenzt. Hierdurch ergibt sich bereits ein zumindest teilweise umlaufender Hohlraum pro Aussparung, der nur durch radiale Streben zur Stabilisierung des Bleches unterbrochen wird.

Um trotz dieser Unterbrechungen einen durchgängigen Hohlraum zu erhalten, sind vorteilhafterweise die jeweiligen radialen Streben zweier Bleche gegeneinander in Umfangsrichtung versetzt angeordnet. Dadurch werden Unterbrechungen des Hohlraums durch eine Strebe eines Bleches durch eine durchgängige Aussparung eines neben der Strebe angeordneten benachbarten Bleches durchbrochen. Der Hohlraum windet sich somit in ZickZack-Form durch die Bleche, so dass er trotz entsprechender Stabilisierungsstreben durchgehend umlaufend ausgestaltet ist.

In besonders vorteilhafter Ausgestaltung sind die Aussparungen in das jeweilige Blech radiär symmetrisch eingebracht.

Mit anderen Worten: Das jeweilige Blech ist so ausgestaltet, dass es bei einer Drehung um einen gewissen Winkel um die von der Welle des Läufers gebildete Mittelachse wieder mit sich selbst zur Deckung kommt. Dies vereinfacht den Herstellungsprozess beispielsweise durch Stanzen erheblich.

Die Aussparungen sind dabei weiter vorteilhafterweise in die Anzahl von Blechen deckungsgleich eingebracht, d.h. alle Bleche weisen identische Aussparungen auf und sind lediglich in Umfangsrichtung gegeneinander versetzt angeordnet. Dadurch ist nur eine einzige Form auszustanzen, was den Herstellungsprozess weiter vereinfacht.

Eine noch weitere Vereinfachung der Herstellung wird erreicht, indem vorteilhafterweise ein Teil der Anzahl der Bleche gegen einen anderen Teil im Wesentlichen um 180 Grad geteilt durch die Zähligkeit der Radiärsymmetrie in Umfangsrichtung versetzt ist. Mit anderen Worten: Die radialen Streben des einen Teils der Bleche sind in der Mitte der Aussparungen des anderen Teils angeordnet. Dadurch ergibt sich eine einfach herzustellende, regelmäßige Form des umlaufenden Hohlraums in der Art eines umlaufenden Rechtecksignals.

Vorteilhafterweise ist im Hohlraum ein umlaufender, elektrisch leitender Kurzschlussring angeordnet.

In einem Verfahren zur Herstellung eines beschriebenen Läufers werden vorteilhafterweise die Bleche des Blechpakets aus einem fortlaufenden Blechstreifen ausgestanzt und zum Blechpaket aufgestapelt, d. h. der Läufer wird mittels der so genannten Stanzpaketiertechnik hergestellt. Dabei werden die Bleche aus einem Blechstreifen ausgestanzt und in einem letzten Arbeitsschritt auf einer Arbeitsplatte aufeinander gestapelt. Die oben beschriebenen Formen für die Aussparungen und ihre Anordnung kann in der Stanzpaketiertechnik besonders einfach realisiert werden, da einerseits besonders einfach gleiche Aussparungen eingebracht werden können, und andererseits die Ausrichtung in Umfangsrichtung durch entsprechende Drehung der Arbeitsplatte oder Drehung in der Paketierstation erreicht werden kann.

In weiterer vorteilhafter Ausgestaltung des Verfahrens wird der Kurzschlussring in den Hohlraum im Druckgussverfahren eingebracht. Der Kurzschlussring ist üblicherweise aus Kupfer oder Aluminium gefertigt, welche sich für das Druckgussverfahren gut eignen. Der durch die Aussparungen gebildete Hohlraum bildet die Gussform für das Verfahren und der Kurzschlussring wird passgenau in die Bleche eingebracht. Dies kann in einem Schritt mit dem Einbringen der axialen Metallstäbe geschehen, die den Kurzschlusskäfig bilden. Dadurch vereinfacht sich die Herstellung weiter.

Ein Elektromotor umfasst vorteilhafterweise einen zuvor beschriebenen und oder einen mit dem zuvor beschriebenen Verfahren hergestellten Läufer. Ein derartiger Elektromotor weist nämlich trotz einfacher Herstellung eine besonders hohe Maximaldrehzahl auf.

Die mit der Erfindung erzielten Vorteile bestehen insbesondere darin, dass durch die Einbringung des Kurzschlussrings direkt in einen umlaufenden Hohlraum im Blechpaket des Läufers eines Elektromotors eine Stabilisierung des Kurzschlussrings in technisch besonders einfacher Weise erreicht wird und so dessen Maximaldrehzahl erhöht wird. Durch die Nutzung der Stanzpaketiertechnik wird dieser Vorteil besonders aufwandsarm erzielt.

Ein Ausführungsbeispiel der Erfindung wird anhand einer Zeichnung näher erläutert. Darin zeigen:
- FIG 1: einen teilweisen Längsschnitt durch einen Läufer für einen Elektromotor in Kurzschlussläuferbauweise,
- FIG 2: ein Läuferblech des Läufers,
- FIG 3: ein Endblech des Läufers,
- FIG 4: eine Aufsicht auf den aus Läuferblechen und Endblechen zusammengesetzten Läufer ohne eingebrachten Kurzschlusskäfig,
- FIG 5: eine vergrößerte Darstellung der Aufsicht aus FIG 4, und
- FIG 6: eine Aufsicht auf den Läufer nach Einbringen des Kurzschlusskäfigs.

Gleiche Teile sind in allen Figuren mit denselben Bezugszeichen versehen.

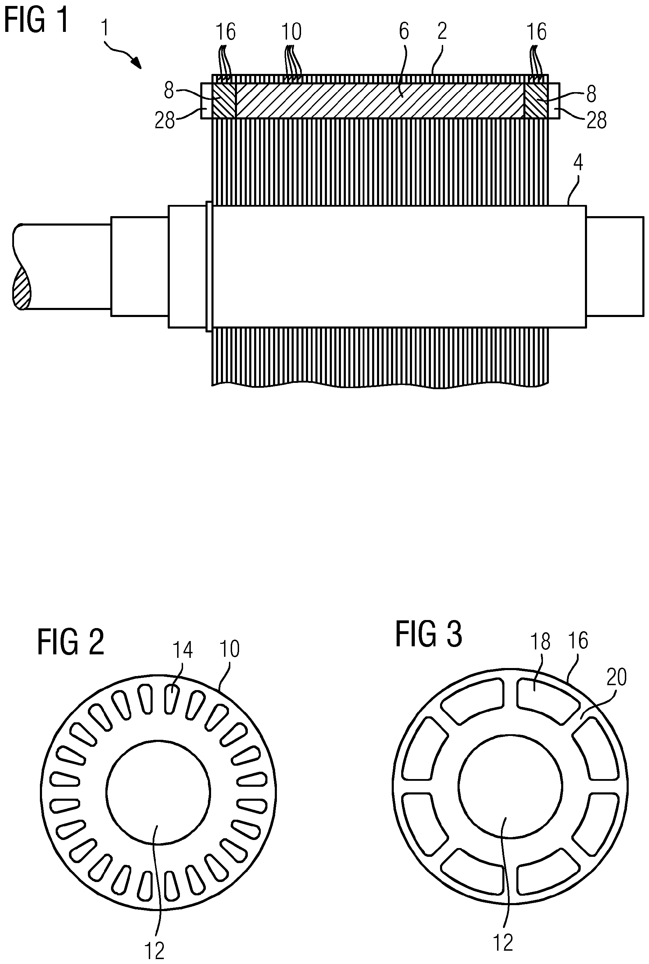

FIG 1 zeigt einen Läufer 1 für einen Elektromotor. Er ist als Kurzschlussläufer ausgelegt und weist statt einer aus Draht gewickelten, über Schleifringe versorgten Spule wie beim Schleifringläufermotor einen in einem Blechpaket 2 dauernd kurzgeschlossenen Käfig auf. Der Läufer 1 umfasst das auf einer Welle 4 angeordnete Blechpaket 2 aus Eisen, in das Metallstäbe 6 aus Nichteisenmetallen, z. B. Kupfer oder Aluminium eingebettet sind. Die Metallstäbe 6 erstrecken sich im Wesentlichen in axialer Richtung, sind jedoch zu dieser etwas in Umfangsrichtung geneigt. Sie sind an den axialen Enden des Blechpakets 2 mit umlaufenden Kurzschlussringen 8 verbunden.

Das Blechpaket 2 besteht aus einzelnen, gegenseitig isolierten Blechen, in die zur Aufnahme der Metallstäbe 6 Aussparungen eingestanzt sind. Dies wird in den FIG 2 und 3 noch näher gezeigt. Die Bleche werden im Stanzpaketierverfahren hergestellt. Bei diesem Verfahren durchläuft ein Blechstreifen nacheinander verschiedene Stanzwerkzeuge, so dass kontinuierlich Strukturen und schließlich die Außenform der Blechscheibe selbst ausgestanzt werden. Die so entstehenden Bleche werden zu einem Paket zusammengefasst, indem sie nach dem finalen Ausstanzen auf eine Arbeitsplatte oder Paketierstation fallen und zusammengefügt werden.

Die Metallstäbe 6 werden in die Aussparungen des Blechpakets 2 (Nuten oder Löcher) im Druckgussverfahren eingegossen. Sie bestehen aus Aluminium oder Kupfer. Bei Kurzschlussläufern ist die Zahl der Nuten oder Löcher und damit auch die Zahl der Metallstäbe 6 im Blechpaket 2 anders als die Nutenzahl des nicht näher gezeigten Ständers, sie kann entweder größer oder kleiner sein. In der Regel hat der Kurzschlussläufer eine kleinere Nutenzahl als der Ständer. Zum einen dient die unterschiedliche Nutenzahl als Maßnahme zur Überwindung des Sattelmoments. Außerdem können so gestaltete Läufer für Motoren mit unterschiedlichen Polpaarzahlen verwendet werden.

Die Funktionsweise des Kurzschlussläufers wird im Folgenden kurz erläutert: Durch das magnetische Drehfeld der Stator-Spulen wird in dem Metallkäfig, d. h. den Metallstäben 6 und den Kurzschlussringen 8 eine Läuferspannung induziert. Aufgrund der untereinander kurzgeschlossenen Metallstäbe 6 fließen in ihnen entsprechende Läuferströme, die ein eigenes Magnetfeld erzeugen. Die Verkopplung des Stator-Drehfeldes mit dem Käfigläufer-Feld führt zur Drehbewegung des Läufers 1. Bei steigender Drehzahl sinken sowohl die induzierte Läuferspannung, als auch der Läuferstrom. Außerdem verringert sich der Läuferblindwiderstand, was zur Folge hat, dass die Phasenverschiebung zwischen Läuferspannung und Läuferstrom kleiner wird.

Die Maximaldrehzahl wird in der Regel durch die mechanische Stabilität der umlaufenden Kurzschlussringe 8 begrenzt. Daher ist der Kurzschlussring im Ausführungsbeispiel in besonderer Form in das Blechpaket 2 integriert. Das Blechpaket 2 besteht im Mittelteil aus üblichen runden Läuferblechen 10, wie in FIG 2 in axialer Aufsicht gezeigt. Das Läuferblech 10 ist rund und weist in der Mitte ein Loch 12 für die Welle 4 auf. Entlang des Umfangs sind gleichförmige Löcher 14 eingebracht, die so ausgestaltet sind, dass sich eine vielzählige Radiärsymmetrie ergibt. Sie sind zudem spiegelsymmetrisch zu einer durch den Mittelpunkt der Welle 4 in radialer Richtung verlaufenden Achse.

Die leicht schräge Anordnung der Metallstäbe 6 wird dadurch erreicht, dass die Läuferbleche 10 in Umfangsrichtung entlang der Welle 4 kontinuierlich gegeneinander leicht versetzt angeordnet sind.

Die in den beiden axialen Endbereichen des Läufers 1 abschließend angeordneten Bleche des Blechpakets 2 sind hingegen anders aufgebaut. Ein derartiges Endblech 16 ist in FIG 3 dargestellt. Es weist einen identischen Umfang wie ein Läuferblech 10 auf und ebenso ein identisches Loch 12 in der Mitte zum Durchtritt der Welle 4.

Anstatt der kleinen Löcher 14 weist jedes Endblech 16 jedoch Aussparungen 18 auf, die sich in Umfangsrichtung erstrecken. Ihre Länge ist so bemessen, dass sie im Vergleich zu den Läuferblechen 10 ca. drei Löcher 14 der Läuferbleche 10 umfassen würden. Die Aussparungen sind ebenfalls so ausgestaltet, dass sich eine Radiärsymmetrie ergibt, die jedoch nur achtzahlig ist, d. h. eine Drehung um ein Achtel eines ganzen Kreises bringt das Endblech 18 mit sich selbst wieder zur Deckung. Die Endbleche 18 sind zudem ebenso spiegelsymmetrisch zu einer durch den Mittelpunkt der Welle 4 in radialer Richtung verlaufenden Achse. Zwischen den Aussparungen 18 verbleiben radiale Streben 20. Sowohl bei Läuferblechen 10 als auch bei Endblechen 16 sind die Löcher 14 bzw. Aussparungen 20 in radialer Richtung durch einen definierten Innen- und Außenradius begrenzt.

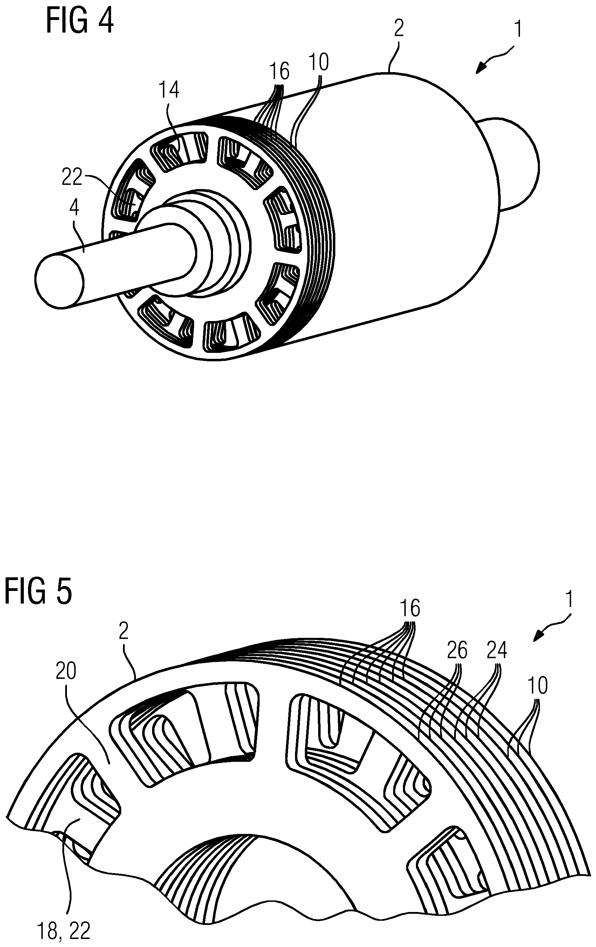

Aufbau und Herstellung des Läufers 1 werden in den FIG 4 bis 6 weiter erläutert. Zunächst werden die Bleche wie in den FIG 2 und 3 gezeigt ausgestanzt und zu einem Blechpaket 2 zusammengefasst, das auf eine Welle 4 aufgefädelt wird, siehe FIG 4. Das Blechpaket 2 besteht mittig aus den Läuferblechen 10, die wie bereits beschrieben in Umfangsrichtung kontinuierlich zueinander versetzt sind, um einen leicht schrägen Durchgang zu bilden.

Die Endbleche 16 hingegen, die beiderseits den axialen Abschluss des Blechpakets 2 bilden, sind so angeordnet, dass sie einen um die Welle 4 umlaufenden Hohlraum 22 bilden. Dies ist in FIG 5 noch vergrößert dargestellt. Dazu schließt sich im Ausführungsbeispiel an die Läuferbleche 10 zunächst ein erster Teil 24 von Endblechen 16 an, der übereinander in Deckung angeordnet ist. Daran schließt sich ein zweiter Teil 26 von Endblechen 16 an, der ebenfalls übereinander in Deckung angeordnet ist, aber gegenüber dem ersten Teil 24 um ein Sechzehntel, d. h. genau die Hälfte der Zähligkeit der Radiärsymmetrie, in Umfangsrichtung versetzt ist. Die gesamte Anordnung der Bleche in der beschriebenen Weise erfolgt im Stanzpaketierverfahren.

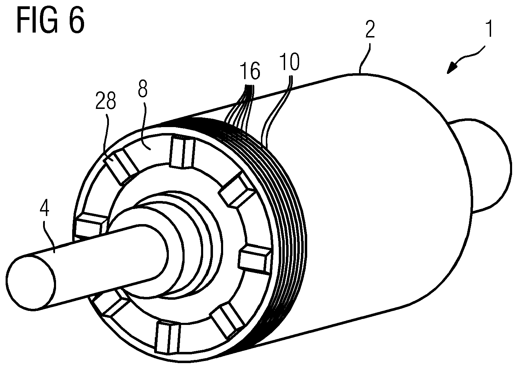

Dadurch bildet sich ein in Umfangsrichtung durchgehender Hohlraum 22, der in Umfangsrichtung gesehen links und rechts abwechselnd Streben 20 aufweist. In diesen Hohlraum 22 wird nun der Kurzschlussring 8 eingebracht, wie in FIG 6 gezeigt. Entsprechend ist die Anzahl der Endbleche 16 so bemessen, dass deren Dicke der für den Läufer 1 auslegungsgemäßen Dicke eines herkömmlichen Kurzschlussrings 8 entspricht.

FIG 6 zeigt den fertigen Läufer 1. Der Hohlraum 22 und die Durchgänge, die durch die Löcher 14 in den Läuferblechen 10 gebildet werden, werden im Druckgussverfahren mit Aluminium, Kupfer oder anderen Nicht-Eisen-Verbindungen ausgefüllt. Dadurch entsteht der Läuferkäfig.

Das Druckgusswerkzeug schließt dabei die axialen Enden des Läufers 1 ab und ist mit Aussparungen versehen, die deckungsgleich mit den Streben 20 des äußeren Teils 26 der Endbleche 16 sind. Dadurch entstehen beim Druckguss Überhänge 28, die über den Streben 20 liegen und dafür sorgen, dass auch das letzte Endblech 16 axial angebunden ist. Die Überhänge 28 sind im Schnitt auch in FIG 1 gezeigt.

## Patentansprüche

1. Läufer (1) für einen Elektromotor, umfassend ein auf einer Welle (4) angeordnetes Blechpaket (2) aus einer Anzahl von gegeneinander isolierten Blechen (10, 16), wobei in einem axialen Randbereich des Blechpakets (2) in eine Anzahl von Blechen (16) Aussparungen (18) eingebracht sind, die derart angeordnet sind, dass sie einen um die Welle (4) umlaufenden Hohlraum (22) bilden,
**dadurch gekennzeichnet, dass** das Blechpaket (2) aus Eisen besteht.

2. Läufer (1) nach Anspruch 1, bei dem sich die jeweilige Aussparung (18) in Umfangsrichtung erstreckt und von radialen Streben (20) begrenzt ist.

3. Läufer (1) nach Anspruch 2, bei dem die jeweiligen radialen Streben (20) zweier Bleche (16) gegeneinander in Umfangsrichtung versetzt angeordnet sind.

4. Läufer (1) nach einem der vorhergehenden Ansprüche, bei dem die Aussparungen (18) in das jeweilige Blech (16) radiärsymmetrisch eingebracht sind.

5. Läufer (1) nach einem der vorhergehenden Ansprüche, bei dem die Aussparungen (18) in die Anzahl von Blechen (16) deckungsgleich eingebracht sind.

6. Läufer (1) nach Anspruch 4 und 5, bei dem ein Teil der Anzahl (24) der Bleche (16) gegen einen anderen Teil (26) im Wesentlichen um 180 Grad geteilt durch die Zähligkeit der Radiärsymmetrie in Umfangsrichtung versetzt ist.

7. Läufer (1) nach einem der vorhergehenden Ansprüche, bei dem im Hohlraum (22) ein umlaufender, elektrisch leitender Kurzschlussring (8) angeordnet ist.

8. Verfahren zur Herstellung eines Läufers (1) nach einem der vorhergehenden Ansprüche, bei dem die Bleche (10, 16) des Blechpakets (2) aus einem fortlaufenden Blechstreifen ausgestanzt und zum Blechpaket (2) aufgestapelt werden, wobei in dem axialen Randbereich des Blechpakets (2) die Bleche (16) derart angeordnet werden, dass sie einen um die Welle (4) umlaufenden Hohlraum (22) bilden und das Blechpaket aus Eisen besteht.

9. Verfahren nach Anspruch 8 zur Herstellung eines Läufers (1) nach Anspruch 7, bei dem der Kurzschlussring (8) in den Hohlraum (22) im Druckgussverfahren eingebracht wird.

10. Elektromotor mit einem Läufer (1) nach einem der Ansprüche 1 bis 7 und/oder mit einem Läufer (1), hergestellt mit dem Verfahren nach Anspruch 8 oder 9.

## Claims

1. Rotor (1) for an electric motor, comprising a laminated core (2) arranged on a shaft (4), said core consisting of a number of laminations insulated from one another (10, 16), wherein in an axial edge region of the laminated core (2) cutout sections (18) are introduced into a number of laminations (16) and are arranged such that they form a void (22) running around the shaft (4),
**characterised in that** the laminated core (2) consists of iron.

2. Rotor (1) according to claim 1, in which the respective cutout section (18) extends in the circumferential direction and is delimited by radial braces (20).

3. Rotor (1) according to claim 2, in which the respective radial braces (20) of two laminations (16) are arranged offset from one another in the circumferential direction.

4. Rotor (1) according to one of the preceding claims, in which the cutout sections (18) are introduced radially symmetrically into the respective lamination (16).

5. Rotor (1) according to one of the preceding claims, in which the cutout sections (18) are introduced coincidently into the number of laminations (16).

6. Rotor (1) according to claims 4 and 5, in which a part of the number (24) of laminations (16) is offset with respect to another part (26) essentially by 180 degrees divided by the n-fold axis of radial symmetry in the circumferential direction.

7. Rotor (1) according to one of the preceding claims, in which a circumferential, electrically conductive short-circuit ring (8) is arranged in the void (22).

8. Method for producing a rotor (1) according to one of the preceding claims, in which the laminations (10, 16) of the laminated core (2) are punched out from a continuous sheet metal strip and stacked to form the laminated core (2), wherein the laminations (16) are arranged such in the axial edge region of the laminated core (2) that they form a void (22) running around the shaft (4), and the laminated core consists of iron.

9. Method according to claim 8 for producing a rotor (1) according to claim 7, in which the short-circuit ring (8) is introduced into the void (22) in the die casting process.

10. Electric motor comprising a rotor (1) according to one of claims 1 to 7 and/or comprising a rotor (1) produced using the method according to claim 8 or 9.

## Revendications

1. Rotor ( 1 ) d'un moteur électrique, comprenant un paquet ( 2 ) de tôles monté sur un arbre ( 4 ) et constitué d'un certain nombre de tôles ( 10, 16 ) isolées les unes par rapport aux autres, dans lequel, dans une partie de bord axial du paquet ( 2 ) de tôles, sont ménagées dans un certain nombre de tôles ( 16 ) des évidements ( 18 ) disposés de manière à former une cavité ( 22 ) faisant le tour de l'arbre ( 4 ),
**caractérisé en ce que** le paquet ( 2 ) de tôles est en fer.

2. Rotor ( 1 ) suivant la revendication 1, dans lequel l'évidemment ( 18 ) s'étend dans la direction périphérique et est délimité par des entretoises ( 20 ) radiales.

3. Rotor ( 1 ) suivant la revendication 2, dans lequel les entretoises ( 20 ) radiales de deux tôles ( 16 ) sont décalées l'une par rapport à l'autre dans la direction périphérique.

4. Rotor ( 1 ) suivant l'une des revendications précédentes, dans lequel les évidements ( 18 ) sont disposés à symétrie radiale dans chaque tôle ( 16 ).

5. Rotor ( 1 ) suivant l'une des revendications précédentes, dans lequel les évidements ( 18 ) sont ménagés en coïncidence dans le nombre de tôles ( 16 ).

6. Rotor ( 1 ) suivant la revendication 4 et 5, dans lequel une partie du nombre ( 24 ) des tôles ( 16 ) est, par rapport à une autre partie ( 26 ), décalée sensiblement de 180 degrés dans la direction périphérique en étant décalée par le degré de la symétrie radiale.

7. Rotor ( 1 ) suivant l'une des revendications précédentes, dans lequel un anneau ( 8 ) de court-circuit sans fin et conducteur de l'électricité est disposé dans la cavité ( 22 ).

8. Procédé de fabrication d'un rotor ( 1 ) suivant l'une des revendications précédentes, dans lequel on estampe les tôles ( 10, 16 ) du paquet ( 2 ) de tôles dans une bande de tôle continue et on les empile en le paquet ( 2 ) de tôles, dans lequel on met les tôles ( 16 ) dans la partie de bord axial du paquet ( 2 ) de tôles de manière à ce qu'elles forment une cavité ( 22 ) faisant le tour de l'arbre ( 4 ) et le paquet de tôles est en fer.

9. Procédé suivant la revendication 8 de fabrication d'un rotor ( 1 ) suivant la revendication 7, dans lequel on met l'anneau ( 8 ) de court-circuit dans la cavité ( 22 ) dans le procédé de coulée sous pression.

10. Moteur électrique ayant un rotor ( 1 ) suivant l'une des revendications 1 à 7 et/ou un rotor ( 1 ) fabriqué par le procédé suivant la revendication 8 ou 9.
